# EUROPEAN PATENT APPLICATION

(11) **EP 4 556 951 A1**
(43) Date of publication of application: **21.05.2025**
(21) Application number: 23839631.1
(22) Date of filing: 11.07.2023
(51) Int. Cl.: G01S 11/06, B64C 39/02, G01S 5/02, G01S 11/04, G05D 1/20

(54) **FLYING MOBILE BODY, FLIGHT POSITION ESTIMATION METHOD, COMPUTER PROGRAM, AND FLIGHT POSITION ESTIMATION SYSTEM**

(30) Priority: 15.07.2022 JP 2022114041
(71) Applicant: Flight Pilot Co., Ltd, Sasebo-shi, Nagasaki 859-6101 (JP)
(72) Inventor: KAWAKAMI, Takayuki, Sasebo-shi, Nagasaki 859-6101 (JP); TERUOKA, Masaki, Sasebo-shi, Nagasaki 859-6101 (JP)
(74) Representative: Serjeants LLP
(86) International application number: PCT/JP2023/025584
(87) International publication number: WO 2024/014459

(57) **Abstract**

Provided are a fling mobile body, a flight position estimation method, a computer program, and a flight position estimation system that make it possible to estimate a flight position of the flying mobile body with high accuracy. The flying mobile body comprising: a receiver; and a control device. The receiver receives a terrestrial broadcast signal transmitted from a broadcasting station. The control device executes a step of estimating a flight position of the flying mobile body based on the received terrestrial broadcast signal.

## Description

### TECHNICAL FIELD

The present disclosure relates to a flying mobile body, a flight position estimation method, a computer program, and a flight position estimation system.

### BACKGROUND ART

In recent years, the use of drones has been rapidly advanced, and accordingly, a method of estimating a flight position of a drone using a global navigation satellite system (GNSS) has been developed. For example, Patent Document 1 discloses a method of acquiring a position of a drone using a global positioning system (GPS).

### PRIOR ART DOCUMENT

### PATENT DOCUMENT

Patent Document 1: JP 2021-194954 A

### SUMMARY OF THE INVENTION

### PROBLEMS TO BE SOLVED BY THE INVENTION

However, there is a case where the GNSS cannot be used due to solar flare or the like, and there is still room for improvement in estimating the flight position of the drone with high accuracy.

Therefore, an object of the present disclosure is to provide a flying mobile body, a flight position estimation method, a computer program, and a flight position estimation system capable of estimating a flight position of the flying mobile body with higher accuracy.

### SOLUTIONS TO THE PROBLEMS

A flying mobile body of the present disclosure is a flying mobile body including: a receiver; and a control device, in which the receiver receives a terrestrial broadcast signal transmitted from a broadcasting station, and the control device executes a step of estimating a flight position of the flying mobile body based on the received terrestrial broadcast signal.

These general and specific aspects may be implemented by a method, a computer program, and a system, and combinations thereof.

### EFFECTS OF THE INVENTION

According to a flying mobile body, a flight position estimation method, a computer program, and a flight position estimation system of the present disclosure, a flight position of the flying mobile body can be estimated with higher accuracy.

### BRIEF DESCRIPTION OF THE DRAWINGS

[Fig. 1] Fig. 1 is a block diagram showing a configuration of a flight position estimation system of the present disclosure.
[Fig. 2] Fig. 2 is a schematic perspective view of a flying mobile body.
[Fig. 3] Fig. 3 is a schematic diagram of a broadcasting station and the flying mobile body that receives a terrestrial broadcast signal transmitted from the broadcasting station.
[Fig. 4] Fig. 4 is another schematic diagram of the broadcasting station and the flying mobile body that receives the terrestrial broadcast signal transmitted from the broadcasting station.
[Fig. 5] Fig. 5 is a flowchart for describing a flight position estimation method of the flying mobile body.

### DETAILED DESCRIPTION

A flying mobile body, a flight position estimation method, a computer program, and a flight position estimation system according to the present embodiment estimate a flight position of the flying mobile body based on a terrestrial broadcast signal received by the flying mobile body. The flying mobile body includes a receiver and a control device. The receiver receives the terrestrial broadcast signal transmitted from a broadcasting station. The control device executes a step of estimating the flight position of the flying mobile body based on the received terrestrial broadcast signal.

### <Flight Position Estimation System>

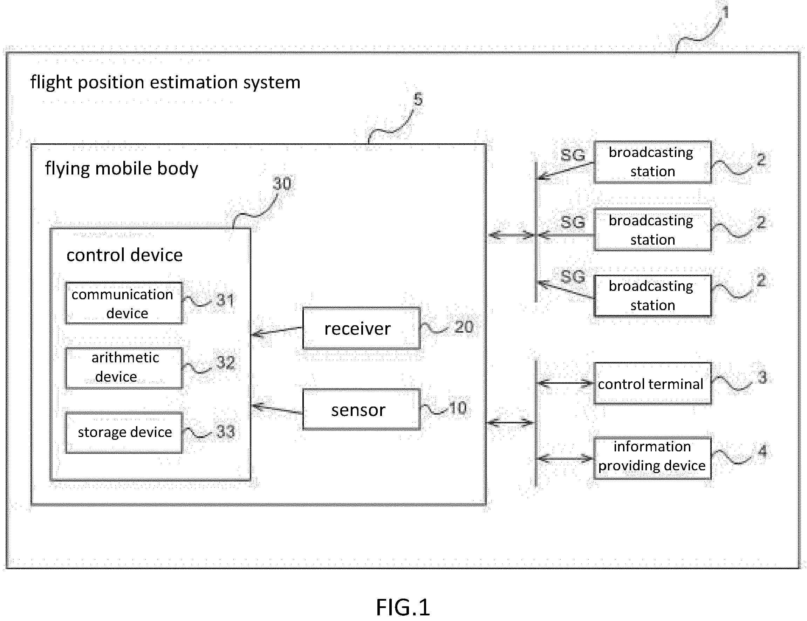

As shown in Fig. 1, a flight position estimation system 1 according to the present disclosure includes a flying mobile body 5 and a broadcasting station 2. A plurality of the broadcasting stations 2 may be included. The flight position estimation system 1 may further include a control terminal 3 and an information providing device 4.

The flying mobile body 5 receives a terrestrial broadcast signal SG transmitted from the broadcasting station 2. The flying mobile body 5 can transmit and receive data to and from each of the control terminal 3 and the information providing device 4. In addition, it may be configured so that transmission/reception of data can be performed between the control terminal 3 and the information providing device 4. The connection among the flying mobile body 5, the control terminal 3, and the information providing device 4 may be wired, wireless, or both wired and wireless.

### <Broadcasting Station>

The broadcasting station 2 is, for example, a broadcasting station that performs terrestrial digital television broadcasting. The broadcasting station 2 transmits, for example, a radio wave signal in a frequency band of 470 MHz or more and 710 MHz or less. The radio wave signal is, in other words, a carrier wave, and may be a carrier wave subjected to digital modulation.

The radio wave signal includes information for specifying the own station such as a call code of the own station. The information for specifying the own station can also be referred to as information for identifying the own station. The radio wave signal may further include information for specifying the position of the own station. The information for specifying the position of the own station is, for example, the latitude and longitude, the address, and the like of the own station. In addition, the radio wave signal may include information regarding the radio wave transmitted by the own station, such as information for specifying the output intensity of the radio wave transmitted by the own station and information for specifying the frequency band of the radio wave emitted by the own station. These pieces of information are also referred to as so-called signals carried on a carrier wave.

In addition, hereinafter, the radio wave signal transmitted by the broadcasting station 2 is also referred to as the terrestrial broadcast signal SG.

### <Control Terminal>

The control terminal 3 is, for example, a remote controller including an operation lever for performing an operation of ascending and descending the flying mobile body 5, an operation of moving the flying mobile body 5 back and forth and left and right, and an operation of turning left and right. The control terminal 3 includes a transmitter, and when the control terminal 3 generates a control signal according to an operation of an operator, the control terminal 3 transmits the control signal to the flying mobile body 5 by using, for example, wireless communication. The control terminal 3 may further include a receiver, and may receive, for example, information regarding the flight from the flying mobile body 5 by using, for example, wireless communication. In addition, the control terminal 3 may be connected to a display that can display necessary information.

### <Information Providing Device>

The information providing device 4 is communicably connected to the control terminal 3 via a communication network N, and provides various types of information for assisting the flight of the flying mobile body 5. The communication network N preferably uses, for example, a specific frequency band. The information providing device 4 is a so-called supplementary data service provider (SDSP), and specifically provides geomagnetic information, weather information, map information, and the like. In addition, when an emergency situation occurs, such as the occurrence of a disaster, the information providing device 4 can also provide occurrence information of the emergency situation.

The frequency of the wireless communication used in the communication network N is, for example, a frequency of a portable station land mobile station, which is a frequency generally used exclusively for drones and robots. Specifically, the frequency of the wireless communication used in the communication network N may be a 169 MHz band. In addition, the frequency may be a 2.4 GHz band, specifically, 2.4835 GHz or more and 2.494 GHz or less, and more specifically, 2.4 GHz. In addition, the frequency may be a 5.7 GHz band.

Furthermore, the frequency of the wireless communication used in the communication network N is a frequency generally used for piloting drones, and may be a frequency of a wireless station that does not require a license and registration for use. Specifically, the frequency of the wireless communication used in the communication network N may be 68 MHz or more and 74.8 MHz or less, more specifically, 73 MHz. In addition, the frequency may be a 920 MHz band or a 2.4 GHz band.

In addition, the frequency of the wireless communication used in the communication network N may be the frequency of the portable station, specifically, a 1.2 GHz band.

Furthermore, the frequency of the wireless communication used in the communication network N may be a frequency generally used for TV broadcasting including data broadcasting, area broadcasting, and the like, specifically, 470 MHz or more and 710 MHz or less, and more specifically, 527 MHz.

Moreover, the frequency of the wireless communication used in the communication network N may be a frequency generally used in a wireless LAN, specifically, 2400 MHz or more and 2497 MHz or less, and more specifically, 2400 MHz.

Furthermore, the frequency of the wireless communication used in the communication network N may be a frequency of a radio wave allowed to be used in the Radio Law.

### <Flying Mobile Body>

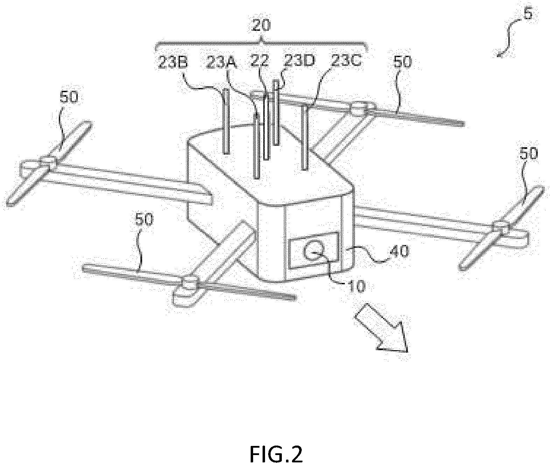

As shown in Figs. 1 and 2, the flying mobile body 5 includes a main body 40, a flying means 50, a receiver 20, and a control device 30. The flying mobile body 5 may further include a sensor 10 and/or a battery.

The flying mobile body 5 in Fig. 2 shows a posture in stable flight (for example, in horizontal flight). In addition, white arrows shown in Figs. 2 to 4 indicate the traveling direction of the flying mobile body 5. Hereinafter, the traveling direction of the flying mobile body 5 may be referred to as "front side" or "front", the direction opposite to the traveling direction may be referred to as "rear side" or "rear", the right side when facing the traveling direction may be referred to as "right side" or "right", and the left side when facing the traveling direction may be referred to as "left side" or "left".

The flying mobile body 5 is, for example, a drone, a volocopter, or the like. The flying mobile body 5 can carry an object, for example. The flying mobile body 5 may be capable of flying in a manned manner with a person on board, or may be capable of flying in an unmanned manner. The flying mobile body 5 may fly while being connected to external electric power and being supplied with electric power, or may fly while being supplied with electric power by a battery mounted thereon. The flying mobile body 5 may be connected to an external device such as the control terminal 3 and the information providing device 4 via a connection line, and may transmit and receive a signal related to movement such as flight via the connection line. In addition, the flying mobile body 5 may transmit and receive the signal related to movement such as flight to and from the external device via radio waves.

### <<Main Body>>

The main body 40 incorporates, for example, the control device 30, the sensor 10, the battery, a wiring board, and the like. When the flying mobile body 5 carries an object, the object to be carried may be mounted on the main body 40. In addition, when the flying mobile body 5 flies in a manned manner, a person may board the main body 40.

### <<Flying Means>>

The flying mobile body 5 can fly by the flying means 50. The flying means 50 includes, for example, a rotary blade such as a propeller, and a rotary drive such as a motor. The flying means 50 may be connected to the main body 40. A plurality of the flying means 50 may be provided.

### <<Receiver>>

The receiver 20 includes, for example, an antenna for terrestrial digital television broadcasting. The receiver 20 receives, via the antenna, the terrestrial broadcast signal SG transmitted from the broadcasting station 2. The antenna is disposed on an upper surface of the main body 40, for example. The upper surface of the main body 40 is an upper surface when the flying mobile body 5 is stably flying. In addition, the antenna may be incorporated in the main body 40. Moreover, the antenna may be a directional antenna.

The receiver 20 may include one antenna or a plurality of antennas. In a case where the receiver 20 includes two antennas, the two antennas are disposed, for example, at bilaterally symmetrical positions or longitudinally symmetrical positions in the flying mobile body 5. In a case where the receiver 20 includes three or more antennas, the plurality of antennas is disposed, for example, with one antenna as a center antenna and the other antennas as peripheral antennas surrounding the center antenna. The peripheral antennas are equidistantly spaced from the center antenna and disposed at equal intervals. That is, the peripheral antennas are disposed at equal intervals on one circumference with the center antenna as a center.

In the example shown in Fig. 2, the flying mobile body 5 includes one center antenna 22 and four peripheral antennas. With respect to the center antenna 22, the four peripheral antennas are a first peripheral antenna 23A disposed on the right front side, a second peripheral antenna 23B disposed on the right rear side, a third peripheral antenna 23C disposed on the left front side, and a fourth peripheral antenna 23D disposed on the left rear side. The first peripheral antenna 23A to fourth peripheral antenna 23D are positioned equidistantly from the center antenna 22. A distance between the first peripheral antenna 23A and the second peripheral antenna 23B, a distance between the second peripheral antenna 23B and the third peripheral antenna 23C, a distance between the third peripheral antenna 23C and the fourth peripheral antenna 23D, and a distance between the fourth peripheral antenna 23D and the first peripheral antenna 23A are equal.

The number of the peripheral antennas is not limited to four. As described later, the flying mobile body 5 estimates a positional relationship between the flying mobile body 5 and the broadcasting station 2 based on the terrestrial broadcast signals SG received by the peripheral antennas. Therefore, when the number of the peripheral antennas is large, the flight position of the flying mobile body 5 can be estimated with higher accuracy. Furthermore, as described later, in a case where the direction of the broadcasting station 2 as viewed from the flying mobile body 5 is estimated based on the terrestrial broadcast signals SG received by the peripheral antennas, the number of the peripheral antennas is preferably an integral multiple of four.

The receiver 20 can transmit the terrestrial broadcast signal SG received by the antenna to the control device 30. In a case where the receiver 20 includes the plurality of antennas, the receiver 20 can independently transmit the terrestrial broadcast signals SG received by the respective antennas to the control device 30.

In the case where the receiver 20 includes the plurality of antennas, electricity may be supplied to the respective antennas independently. The control regarding the supply of electricity to the respective antennas may be performed by the control device 30, for example.

In addition, the receiver 20 may include a control unit. The control of the supply of electricity to the respective antennas may be performed by the control unit of the receiver 20.

### <<Sensor>>

The sensor 10 includes at least one of an image sensor and a laser sensor that acquire surrounding environment information regarding the surrounding environment. The image sensor and the laser sensor are, for example, sensors capable of acquiring a landscape around the flying mobile body 5 as image information. The image sensor is, for example, a monocular camera (wide-angle camera, fisheye camera, or omnidirectional camera), a compound eye camera (stereo camera or multi-camera), an RGB-D camera (depth camera or ToF camera), or the like. The laser sensor is, for example, a laser range sensor, a Lidar sensor, or the like.

The sensor 10 may include a sensor that observes the movement of the flying mobile body 5, such as an acceleration sensor, an angular velocity sensor, or an altitude sensor. In addition, the sensor 10 may include a sensor that observes the weather condition around the flying mobile body 5, such as an atmospheric pressure sensor or a wind speed sensor. Furthermore, the sensor 10 may include a GPS.

### <<Control Device>>

As shown in Fig. 1, the control device 30 includes a communication device 31, an arithmetic device 32, and a storage device 33.

The communication device 31 is a communication means that enables data communication with other components in the control device 30 such as the receiver 20 and the sensor 10, and with external devices such as the control terminal 3 and the information providing device 4. For example, the communication device 31 receives a control signal generated in the control terminal 3. In addition, for example, the communication device 31 receives the terrestrial broadcast signal SG received by the receiver 20, various measurement data measured by the sensor 10, and the like.

The data communication is wired and/or wireless data communication, and may be performed according to a known communication standard. For example, wired data communication is performed by using, as the communication device 31, a communication controller of a semiconductor integrated circuit that operates in accordance with the Ethernet (registered trademark) standard, the USB (registered trademark) standard, and/or the like. In addition, wireless data communication is performed by using, as the communication device 31, a communication controller of a semiconductor integrated circuit that operates in accordance with the IEEE802.11 standard related to a local area network (LAN), a fourth generation/fifth generation, which is so-called 4G/5G, mobile communication system related to mobile communication, and/or the like.

The storage device 33 is a recording medium that records various types of information. The storage device 33 is implemented by, for example, a RAM, a ROM, a flash memory, a solid state drive (SSD), a hard disk drive, other storage devices, or an appropriate combination thereof. The storage device 33 stores, for example, a position estimation program P which is a computer program executed by the arithmetic device 32, and various data used for executing the estimation of the flight position. For example, the storage device 33 stores map information, flight path information, information regarding the broadcasting station 2, aircraft information, and the like. The information regarding the broadcasting station 2 is, for example, information regarding the position of each broadcasting station 2, the call code of each broadcasting station 2, the frequency band and the output intensity of the terrestrial broadcast signal SG transmitted from each broadcasting station 2, and the time such as the delay time.

The arithmetic device 32 is a controller that controls the entire flying mobile body 5. For example, the arithmetic device 32 reads and executes the position estimation program P stored in the storage device 33, thereby implementing various types of processing for implementing the estimation of the flight position of the flying mobile body 5. In various types of processing, the arithmetic device 32 can estimate the flight position of the flying mobile body 5 with high accuracy by effectively using the terrestrial broadcast signal SG of the broadcasting station 2, making it possible to cause the flying mobile body 5 to fly based on the estimated flight position. Hereinafter, the flight of the flying mobile body 5 based on the terrestrial broadcast signal SG may be referred to as a "first mode".

Furthermore, the arithmetic device 32 can estimate the flight position of the flying mobile body 5 by effectively using the surrounding environment information regarding the surrounding environment acquired by the sensor 10, making it possible to cause the flying mobile body 5 to fly based on the surrounding environment information. Hereinafter, the flight of the flying mobile body 5 based on the surrounding environment information may be referred to as a "second mode".

In addition, the arithmetic device 32 can determine a mode of causing the flying mobile body 5 to fly, out of the first mode and the second mode, according to the altitude of the flying mobile body 5 and/or the flight information including the place where the flying mobile body 5 flies. The place where the flying mobile body 5 flies is, for example, indoors or outdoors.

The arithmetic device 32 may implement a predetermined function by cooperation of hardware and software. In addition, the arithmetic device 32 may be a hardware circuit exclusively designed to implement a predetermined function. For example, the arithmetic device 32 can be implemented by various processors such as a CPU, an MPU, a GPU, an FPGA, a DSP, and an ASIC.

Steps executed by the arithmetic device 32 in order to estimate the flight position of the flying mobile body 5 will be described below. Each of the steps described below may be executed by reading the position estimation program P stored in the storage device 33.

The arithmetic device 32 executes
(1) a step of estimating the flight position of the flying mobile body based on the received terrestrial broadcast signal (hereinafter, also referred to as a "flight position estimation step").

In addition, the arithmetic device 32 may execute:
(2) a step of acquiring the surrounding environment information by the sensor (hereinafter, also referred to as a "surrounding environment information acquisition step"); and
(3) a step of determining a mode of causing the flying mobile body to fly, out of a first mode of causing the flying mobile body to fly based on the terrestrial broadcast signal and a second mode of causing the flying mobile body to fly based on the surrounding environment information (hereinafter, also referred to as a "mode determination step").

### (1) Flight Position Estimation Step

### (Flight Position Estimation)

In the flight position estimation step, for example, the flight position of the flying mobile body 5 is estimated based on a received signal strength indicator (RSSI) intensity of the terrestrial broadcast signal SG received by the receiver 20.

Here, generally, as the distance from the broadcasting station 2 increases, the RSSI intensity decreases in proportion to the square of the distance from the broadcasting station 2. As described above, the broadcasting station 2 transmits the terrestrial broadcast signal SG including, for example, the information for specifying the output intensity of the radio wave transmitted by the own station and the information for specifying the position of the own station.

By receiving the terrestrial broadcast signal SG, the arithmetic device 32 acquires the output intensity of the radio wave transmitted by the broadcasting station 2 and the RSSI intensity of the terrestrial broadcast signal SG received by the flying mobile body 5, and estimates the distance from the broadcasting station 2 based on these intensities.

In addition, the arithmetic device 32 estimates the direction from the broadcasting station 2 based on, for example, a temporal change in the RSSI intensity. For example, in a case where the RSSI intensity decreases with the lapse of time, it is estimated that the flying mobile body 5 is away from the broadcasting station 2, and in a case where the RSSI intensity increases with the lapse of time, it is estimated that the flying mobile body 5 is approaching the broadcasting station 2. Furthermore, the arithmetic device 32 estimates the direction of the broadcasting station 2 as viewed from the flying mobile body 5 based on the decrease amount or increase amount of the RSSI intensity with the lapse of time.

As described above, the arithmetic device 32 estimates the distance and direction of the flying mobile body 5 from the broadcasting station 2 based on the RSSI intensity of the terrestrial broadcast signal SG. The arithmetic device 32 can estimate the flight position of the flying mobile body 5 from the estimated distance and direction and the information for specifying the position of the broadcasting station 2 included in the terrestrial broadcast signal SG.

In a case where the receiver 20 includes a plurality of peripheral antennas, for example, the distance from the broadcasting station 2 may be estimated from an average value of the RSSI intensities of the terrestrial broadcast signals SG received by the respective peripheral antennas, the position of the broadcasting station 2, and the main intensity of the radio wave transmitted by the broadcasting station 2.

Furthermore, in a case where the receiver 20 includes a plurality of peripheral antennas having directivity, for example, the direction of the broadcasting station 2 as viewed from the flying mobile body 5 may be estimated by comparing the RSSI intensities of the terrestrial broadcast signals SG received by the respective peripheral antennas. For example, the arithmetic device 32 estimates that, out of the plurality of peripheral antennas, a peripheral antenna, which receives the terrestrial broadcast signal SG having a stronger RSSI intensity than the other peripheral antennas, is close to the broadcasting station 2. That is, as viewed from the center antenna 22, the arithmetic device 32 estimates that the broadcasting station 2 is present in a direction where a peripheral antenna, which receives the terrestrial broadcast signal SG having a stronger RSSI intensity than the other peripheral antennas, is present.

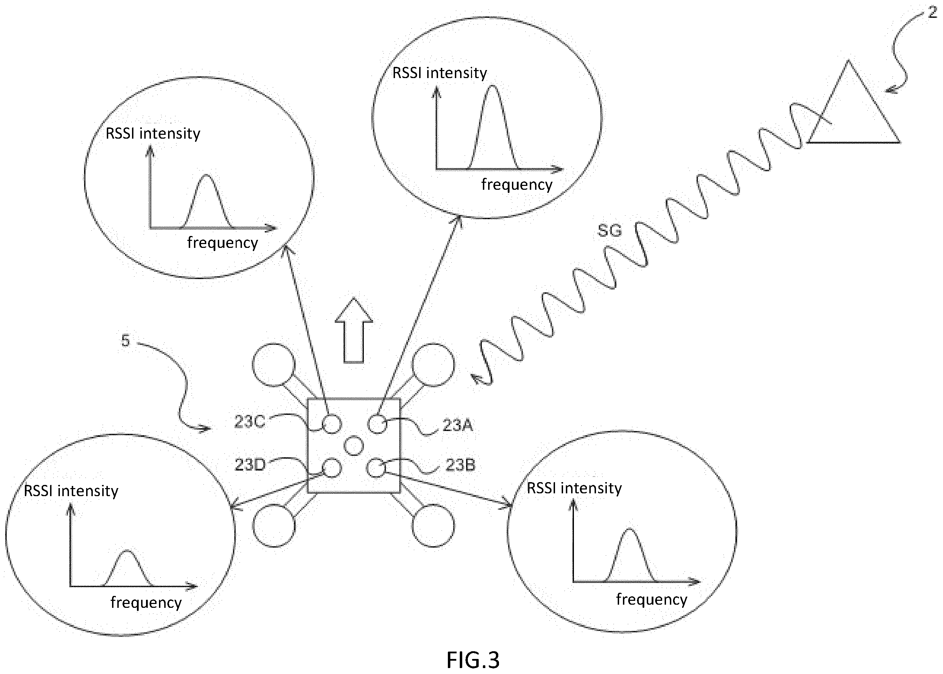

A specific example will be described with reference to Fig. 3. Fig. 3 is a schematic diagram of the broadcasting station and the flying mobile body that receives the terrestrial broadcast signal SG transmitted from the broadcasting station. In Fig. 3, the RSSI intensity of the terrestrial broadcast signal SG received by each peripheral antenna is indicated by a graph. In the graph, the horizontal axis indicates the frequency, and the vertical axis indicates the RSSI intensity. Note that the antenna arrangement of the flying mobile body shown in Fig. 3 is the same as the antenna arrangement of the flying mobile body shown in Fig. 2.

As shown in Fig. 3, when the RSSI intensity of the terrestrial broadcast signal SG received by the first peripheral antenna 23A is stronger than the RSSI intensities of the terrestrial broadcast signals SG received by the second peripheral antenna 23B to the fourth peripheral antenna 23D, the arithmetic device 32 estimates that the broadcasting station 2 is positioned in the right front direction of the flying mobile body 5.

The flight position estimated by the arithmetic device 32 may indicate one point or may have a range of about 30 m × 30 m, preferably about 10 m × 10 m in the horizontal direction.

As described above, the flying mobile body 5 can estimate the flight position of itself by receiving the terrestrial broadcast signal SG transmitted from one broadcasting station 2.

In a case where the flying mobile body 5 receives the terrestrial broadcast signals SG transmitted from two or more broadcasting stations 2, for example, the arithmetic device 32 performs flight position estimation on the terrestrial broadcast signal SG for each broadcasting station 2 based on the RSSI intensity, as described above, and estimates the flight position of the flying mobile body 5 based on each flight position. Specifically, the flight position based on the terrestrial broadcast signal SG of each broadcasting station 2 is estimated as having a certain range, and the range in which the ranges of the flight positions overlap is estimated as the flight position of the flying mobile body 5.

As a result, the flight position of the flying mobile body 5 can be estimated with higher accuracy.

Furthermore, the arithmetic device 32 may estimate the direction of the broadcasting station 2 as viewed from the flying mobile body 5 based on the phase difference of the terrestrial broadcast signals SG received by the respective peripheral antennas 23.

Generally, depending on the direction of the broadcasting station 2 as viewed from the flying mobile body 5, there may be a difference in the phases of the terrestrial broadcast signals SG received by the respective peripheral antennas 23. For example, the phase difference between the left and right peripheral antennas increases in the case where the broadcasting station 2 is positioned on the right (or left) as viewed from the flying mobile body 5 as compared with the case where the broadcasting station 2 is positioned on the front (or rear) as viewed from flying mobile body 5. Similarly, the phase difference between the front and rear peripheral antennas increases in the case where the broadcasting station 2 is positioned on the front (or rear) as viewed from flying mobile body 5 as compared with the case where the broadcasting station 2 is positioned on the right (or left) as viewed from flying mobile body 5.

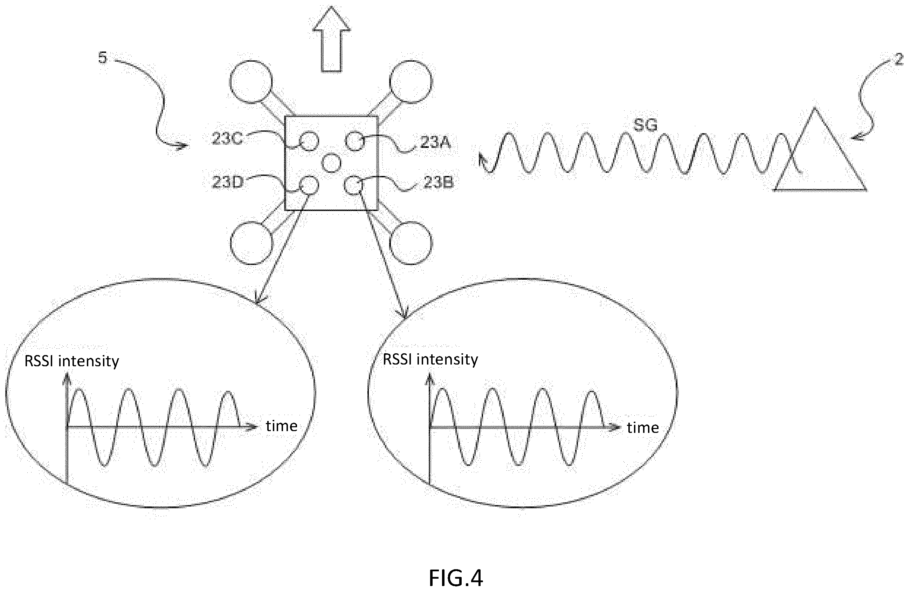

A specific example will be described with reference to Fig. 4. Fig. 4 is another schematic diagram of the broadcasting station and the flying mobile body that receives the terrestrial broadcast signal SG transmitted from the broadcasting station. In Fig. 4, the RSSI intensity of the terrestrial broadcast signal SG received by each of the first peripheral antenna and the third peripheral antenna is indicated by a graph. In the graph, the horizontal axis indicates time, and the vertical axis indicates the RSSI intensity. Note that the antenna arrangement of the flying mobile body shown in Fig. 4 is the same as the antenna arrangement of the flying mobile body shown in Fig. 2.

As shown in Fig. 4, in the flying mobile body 5, in a case where the phase difference between the phase of the signal received by the second peripheral antenna 23B and the phase of the signal received by the fourth peripheral antenna 23D is 0 degrees, the arithmetic device 32 estimates that the broadcasting station 2 is in the direction of 90 degrees or 270 degrees with respect to the traveling direction of the flying mobile body 5. That is, it is estimated that the broadcasting station 2 is on the right side or the left side of the flying mobile body 5.

By using such estimation of the direction of the broadcasting station 2 based on the phase difference together with the estimation of the flight position based on the RSSI intensity described above, the flight position of the flying mobile body 5 can be estimated with higher accuracy.

The arithmetic device 32 causes the flying mobile body 5 to fly based on the flight position estimated in the way as described above. For example, the arithmetic device 32 causes the flying mobile body 5 to fly by causing the estimated flight position to be followed on the flight path stored in the storage device 33. In addition, the control terminal 3 may cause the flying mobile body 5 to fly based on the flight position estimated by the arithmetic device 32.

The flying mobile body 5 having the above configuration can estimate the flight position of the flying mobile body 5 using the terrestrial broadcast signal SG of the broadcasting station 2. Here, the terrestrial broadcast signal SG of the broadcasting station 2 is unlikely to be unusable due to the influence of solar flare, like the GNSS. In addition, the terrestrial broadcast signal SG of the broadcasting station 2 can be received even in a so-called bad weather such as snow or heavy rain, and can be received even in a shadow of a building or the like or indoors. Furthermore, a relay tower that relays the terrestrial broadcast signal SG of the broadcasting station 2 is often installed on a high ground such as a mountain. Since the relay tower itself has a height, the terrestrial broadcast signal SG can be transmitted in a wide range, that is, there is nothing to bother. Therefore, the flying mobile body 5 having the above configuration can estimate the flight position of itself with high accuracy without relying on the flight altitude, the flying place, the weather, and the like. In particular, even in a place, a situation, or the like that is difficult for a person to reach, such as a mountainous area, on the sea, a disaster-stricken area, an accident site, or lifesaving in bad weather, the flying mobile body 5 having the above configuration can fly while estimating the flight position of itself with high accuracy.

Furthermore, since the flying mobile body 5 having the above configuration can estimate the flight position of itself based on the distance and the azimuth with respect to the broadcasting station 2 fixed on the ground, the flying mobile body 5 can estimate the azimuth (magnetic course) of itself in the traveling direction. As a result, the flying mobile body 5 having the above configuration can estimate the azimuth (magnetic course) of itself in the traveling direction even if there is no target or the like that estimates the traveling direction around the flying mobile body 5 such as a situation on the sea or in the mountains.

In addition, since the flying mobile body 5 having the above configuration can estimate the flight position by the control device 30 provided therein, the flying mobile body 5 can estimate the flight position of itself with high accuracy without relying on a communication distance and a communication method with the external device, and the like.

### (Filter Processing and Demodulation Processing)

Furthermore, the arithmetic device 32 may execute filter processing and demodulation processing as pre-processing of the flight position estimation.

For example, the arithmetic device 32 may further execute:
a step of performing filtering processing on the received terrestrial broadcast signal; and
a step of performing demodulating processing on the filtered signal, and may estimate the flight position based on the demodulated signal.

In the step of performing filtering processing, the received terrestrial broadcast signal SG is filtered to remove unnecessary signals. Examples of the unnecessary signal include various radio waves, noise, and the like including the terrestrial broadcast signal SG reflected by a mountain or a building. As the filtering processing, for example, well-known processing such as Kalman filter processing, lowpass filter processing, a finite impulse response filter (FIR filter), or a Madgwick filter can be adopted.

In the step of performing demodulation processing, the carrier wave is removed from the filtered signal, and the signal carried on the carrier wave is extracted. As the demodulation processing, for example, well-known processing such as orthogonal detection can be adopted.

The arithmetic device 32 may estimate the flight position based on the filtered and demodulated signal as described above. The estimation of the flight position based on the filtered and demodulated signal can be executed based on the RSSI intensity and/or the phase difference of the demodulated signal in the similar manner as described above.

By performing the filtering processing and the demodulation processing as described above, the unnecessary signals can be removed from the received terrestrial broadcast signal SG, and the flight position of the flying mobile body 5 can be estimated with higher accuracy.

Note that the filtering processing and the demodulation processing may be executed by the control unit of the receiver 20.

### (Correction Processing)

Furthermore, the arithmetic device 32 may execute correction processing as pre-processing and/or post-processing of the flight position estimation.

For example, the arithmetic device 32 may execute:
a step of receiving flight correction information including at least one of information for specifying acceleration and/or angular velocity of the flying mobile body, geomagnetic information, and information for specifying the altitude; and
a step of performing correction processing on the flight position based on the received terrestrial broadcast signal, based on the flight correction information.

The information for specifying the acceleration is, for example, a measurement value measured by the acceleration sensor provided in the flying mobile body 5.

The information for specifying the angular velocity is, for example, a measurement value measured by the angular velocity sensor provided in the flying mobile body 5.

The information for specifying the altitude is, for example, a measurement value measured by the altitude sensor provided in the flying mobile body 5. The information for specifying the altitude may be a measurement value of the atmospheric pressure measured by the atmospheric pressure sensor provided in the flying mobile body 5. The arithmetic device 32 may calculate the altitude from the measurement value of the atmospheric pressure.

The arithmetic device 32 can receive the information for specifying the acceleration, the angular velocity, and/or the altitude from the respective sensors via the communication device 31.

The geomagnetic information is, for example, transmitted from the information providing device 4 to the arithmetic device 32 via the communication device 31, and is received by the arithmetic device 32.

In the step of performing correction processing, for example, fluctuations in radio waves of the terrestrial broadcast signal SG due to geomagnetism are corrected. In such a case, the step of performing correction processing may be executed before the flight position estimation step.

In addition, in the step of performing correction processing, the temporal change in the estimated flight position may be compared with the flight position estimated from the acceleration and the angular velocity of the flying mobile body 5, the validity of the estimated flight position may be confirmed, and the estimated flight position may be corrected as appropriate. In such a case, the step of performing correction processing is executed after the flight position estimation step.

Furthermore, the arithmetic device 32 may receive the measurement values measured by the other sensors except the acceleration sensor, the angular velocity sensor, the altitude sensor, and the atmospheric pressure sensor, and may correct the estimated flight position as appropriate based on these measurement values.

By executing the step of performing correction processing as described above, the flight position of the flying mobile body 5 can be estimated with higher accuracy.

The step of performing the correction processing, and the steps of performing the filter processing and the demodulation processing may both be performed, or one of them may be performed.

### (2) Surrounding Environment Information Acquisition Step

In the surrounding environment information acquisition step, the arithmetic device 32 acquires the surrounding environment information regarding the surrounding environment by the image sensor and/or the laser sensor. The surrounding environment information is information regarding a landscape around the flying mobile body 5. Specifically, it is the size, arrangement, distance from the flying mobile body 5, and the like of natural objects such as mountains and obstacles including artificial buildings such as buildings, which are around the flying mobile body 5.

In the surrounding environment information acquisition step, for example, the flying mobile body 5 senses the surrounding environment with the image sensor and/or the laser sensor while flying, and creates a two-dimensional or three-dimensional environmental map. At the same time, the flying mobile body 5 sequentially estimates the movement amount of itself in order to estimate the flight position of itself on the environmental map.

The arithmetic device 32 causes the flying mobile body 5 to fly based on the flight position estimated in the way as described above. For example, the arithmetic device 32 causes the flying mobile body 5 to fly in accordance with the created environmental map and avoiding obstacles.

The surrounding environment information acquisition step may be, for example, SLAM control.

By executing the surrounding environment information acquisition step, the flying mobile body 5 can estimate the flight position of itself even when the flying mobile body 5 does not have the map information in advance, unlike the estimation of the flight position that uses the GNSS on the existing map. In addition, the flying mobile body 5 can estimate the flight position of itself even in a place where there is no map, such as indoors or a place where a disaster has occurred. Furthermore, the flying mobile body 5 can suppress collision with the obstacle and can fly more safely.

### (3) Mode Determination Step

In the mode determination step, the arithmetic device 32 determines whether to cause the flying mobile body 5 to fly in the first mode or the second mode based on the altitude of the flying mobile body 5 and/or the place where the flying mobile body 5 flies.

### (Determination of Mode based on Altitude)

For example, the arithmetic device 32 executes:
a step of receiving flight information including information for specifying the altitude of the flying mobile body; and
a step of comparing the altitude of the flying mobile body with a threshold,
determines to cause the flying mobile body to fly in the first mode in the step of determining a mode in a case where the altitude is equal to or greater than the threshold, and
determines to cause the flying mobile body to fly in the second mode in the step of determining a mode in a case where the altitude is less than the threshold.

As described above, the flight information including the information for specifying the altitude of the flying mobile body may be a measurement value measured by the altitude sensor and/or the atmospheric pressure sensor provided in the flying mobile body 5.

The threshold may be set based on a distance between an obstacle around the flying mobile body 5 and the flying mobile body 5. For example, the threshold is set to an altitude at which the flying mobile body 5 flies at a distance of less than 30 m, preferably less than 35 m, from the obstacle around the flying mobile body 5. The altitude may be set in advance by an operator via the control terminal 3. In addition, the altitude may be determined by the arithmetic device 32 based on the surrounding environment information acquired by the image sensor and/or the laser sensor provided in the flying mobile body 5.

Furthermore, the threshold can be set based on, for example, a difference between the flight position estimated by the terrestrial broadcast signal SG and the flight position acquired by the GPS. For example, the threshold is set to an altitude at which a difference between the flight position estimated by the terrestrial broadcast signal SG and the flight position acquired by the GPS is 30 m, preferably exceeding 10 m. The altitude may be determined by the arithmetic device 32.

Here, in general, as the altitude increases, the number of obstacles such as mountains and buildings decreases, and as the altitude decreases, the number of obstacles increases. Therefore, by determining the mode by comparing the altitude of the flying mobile body 5 with the threshold as described above, the flying mobile body 5 can fly more safely at a low altitude where there are many obstacles.

### (Determination of Mode based on Flying Place)

In addition, the arithmetic device 32
may execute a step of receiving flight information including information for specifying whether the flying mobile body flies outdoors or indoors, and
in a case of receiving the information for specifying that the flying mobile body flies indoors, the arithmetic device 32 may determine to cause the flying mobile body to fly in the second mode in the step of determining a mode.

The information for specifying whether the place where the flying mobile body 5 flies is outdoors or indoors can be transmitted from the information providing device 4 to the arithmetic device 32 via the communication device 31. In addition, by inputting the information to the control terminal 3 by the operator, the information may be transmitted from the control terminal 3 to the arithmetic device 32 via the communication device 31.

As described above, in a case of receiving the information for specifying that the flying mobile body 5 flies indoors, for example, the arithmetic device 32 determines to cause the flying mobile body 5 to fly in the second mode. Furthermore, in a case of receiving the information for specifying that the flying mobile body 5 flies outdoors, for example, the arithmetic device 32 may determine a mode by comparing the altitude of the flying mobile body 5 with a threshold, as described above. As a result, the flight position of the flying mobile body 5 can be estimated with higher accuracy indoors and at a low altitude where there are many obstacles. As a result, the flying mobile body 5 can fly more safely.

Note that even when the flying mobile body 5 flies in the first mode, the estimation of the flight position based on the surrounding environment information may be complementarily performed. Furthermore, even when the flying mobile body 5 flies in the first mode, the flight position based on the terrestrial broadcast signal SG may be corrected by the flight position based on the surrounding environment information.

Similarly, even when the flying mobile body 5 flies in the second mode, the estimation of the flight position based on the terrestrial broadcast signal SG may be complementarily performed, and the flight position based on the surrounding environment information may be corrected by the flight position based on the terrestrial broadcast signal SG.

### <Flight Position Estimation Method>

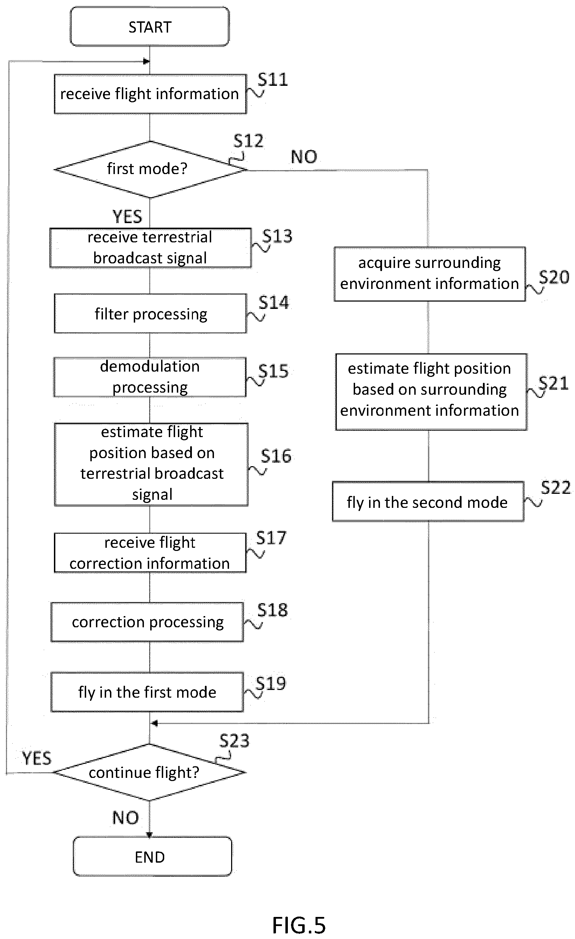

A flight position estimation method executed by the flying mobile body 5 will be described with reference to a flowchart shown in Fig. 5. The flight position estimation method is executed, for example, by reading the position estimation program P stored in the storage device 33. Note that, in the following description, details overlapping with the contents described above will be described in a simplified manner.

The communication device 31 receives the flight information (S11).

The arithmetic device 32 determines whether to fly in the first mode (S12). Whether to fly in the first mode may be determined by comparing the altitude of the flying mobile body 5 with a threshold, or may be determined by, for example, information for specifying the flying place transmitted from the control terminal 3. Furthermore, determining not to fly in the first mode in step S12 (NO) means that it is determined to fly in the second mode.

In a case where it is determined to fly in the first mode in step S12 (YES), the communication device 31 receives the terrestrial broadcast signal SG transmitted from the broadcasting station 2 via the receiver 20 (S13).

The arithmetic device 32 performs the filter processing on the terrestrial broadcast signal SG received in step S13 (S14).

The arithmetic device 32 performs the demodulation processing on the signal filtered in step S14 (S15).

The arithmetic device 32 estimates the flight position of the flying mobile body 5 based on the signal demodulated in step S15. That is, the arithmetic device 32 estimates the flight position of the flying mobile body 5 based on the terrestrial broadcast signal SG (S16).

The communication device 31 receives the flight correction information via the receiver 20 (S17).

The arithmetic device 32 performs the correction processing on the flight position estimated in step S16 based on the flight correction information received in step S17 (S18).

The arithmetic device 32 causes the flying mobile body 5 to fly based on the flight position corrected in step S18. That is, the arithmetic device 32 causes the flying mobile body 5 to fly in the first mode (S19).

When determining not to fly in the first mode (NO), that is, to fly in the second mode in step S12, the arithmetic device 32 acquires the surrounding environment information regarding the surrounding environment by the sensor 10 (S20).

The arithmetic device 32 estimates the flight position of the flying mobile body 5 based on the surrounding environment information acquired in step S20 (S21).

The arithmetic device 32 causes the flying mobile body 5 to fly based on the flight position estimated in step S21. That is, the arithmetic device 32 causes the flying mobile body 5 to fly in the second mode (S22).

Following steps S19 and S22, the arithmetic device 32 determines whether to continue the flight (S23). In a case of determining to continue the flight in step S23 (YES), the arithmetic device 32 returns to step S11. In a case of determining not to continue the flight in step S23 (NO), the arithmetic device 32 ends the position estimation program P.

As a result, the flying mobile body 5 can estimate the flight position of itself by the control device 30 provided therein and fly based on the estimated flight position. That is, the flying mobile body 5 can collectively execute the estimation of the flight position and flight control of itself by the control device 30 provided therein.

Note that the order of the processing shown in Fig. 5 is an example, and the present invention is not limited thereto. Thus, a plurality of the steps may be executed simultaneously. In addition, in the flying mobile body 5, processing not shown in Fig. 5 can be executed simultaneously. For example, the communication device 31 receives information transmitted from the information providing device 4, at any time. In addition, the arithmetic device 32 adds new information received by the communication device 31 and updates data stored in the storage device 33.

### <Modifications>

The example of the frequency band described above in the embodiment has been described by using an example used in Japan. On the other hand, the frequency band to be used may be different in each country. Therefore, the frequency of the radio signal used by a flight position estimation system 1 may also be different in each country. For example, in each country, it is conceivable that a frequency used for piloting a drone or a robot or a frequency used for TV broadcasting or the like, is used by a flying mobile body 5.

The flying mobile body and the flight position estimation method described in all claims of the present disclosure are implemented by cooperation with hardware resources such as a processor, a memory, and a program.

### <Supplement>

Furthermore, the present disclosure can have the following configurations.
(1) A flying mobile body of the present disclosure includes: a receiver; and a control device,
   in which the receiver may receive a terrestrial broadcast signal transmitted from a broadcasting station, and
   the control device may execute a step of estimating a flight position of the flying mobile body based on the received terrestrial broadcast signal.
(2) The flying mobile body according to (1) may further include a sensor including an image sensor and/or a laser sensor that acquires surrounding environment information regarding a surrounding environment,
   in which the control device may execute:
   a step of acquiring the surrounding environment information by the sensor; and
   a step of determining a mode of causing the flying mobile body to fly, out of a first mode of causing the flying mobile body to fly based on the terrestrial broadcast signal and a second mode of causing the flying mobile body to fly based on the surrounding environment information.
(3) The control device of the flying mobile body according to (2) may execute:
   a step of receiving flight information including information for specifying an altitude of the flying mobile body; and
   a step of comparing the altitude of the flying mobile body with a threshold,
   determine to cause the flying mobile body to fly in the first mode in the step of determining a mode in a case where the altitude is equal to or greater than the threshold, and
   determine to cause the flying mobile body to fly in the second mode in the step of determining a mode in a case where the altitude is less than the threshold.
(4) In the flying mobile body according to (3), the threshold may be set based on the surrounding environment information.
(5) The flying mobile body of the present disclosure is a flying mobile body that includes: a receiver including a plurality of antennas; and a control device, and includes a sensor including an image sensor and/or a laser sensor that acquires surrounding environment information regarding a surrounding environment, the receiver receives a terrestrial broadcast signal of a frequency band of 470 MHz or more and 710 MHz or less transmitted from a broadcasting station,
   the control device executes:
   a step of estimating a flight position of the flying mobile body based on intensities of the terrestrial broadcast signals received by the respective antennas and a phase difference of the terrestrial broadcast signals received by the respective antennas;
   a step of acquiring the surrounding environment information by the sensor under SLAM control;
   a step of receiving flight information including information for specifying an altitude of the flying mobile body;
   a step of comparing the altitude of the flying mobile body with a threshold; and
   a step of determining, out of a first mode of causing the flying mobile body to fly based on the terrestrial broadcast signal and a second mode of causing the flying mobile body to fly based on the surrounding environment information acquired by the sensor, to cause the flying mobile body to fly in the first mode in a case where the altitude is equal to or greater than the threshold, and to cause the flying mobile body to fly in the second mode in a case where the altitude is less than the threshold,
   in which correction processing based on the surrounding environment information may be possibly performed even in a case where the flying mobile body flies in the first mode, and correction processing based on the terrestrial broadcast signal may be possibly performed even in a case where the flying mobile body flies in the second mode.
(6) The control device of the flying mobile body according to (2) to (5)
   may execute a step of receiving flight information including information for specifying whether the flying mobile body flies outdoors or indoors, and
   in a case of receiving the information for specifying that the flying mobile body flies indoors, the control device may determine to cause the flying mobile body to fly in the second mode in the step of determining a mode.
(7) The control device of the flying mobile body according to (1) to (6) may execute:
   a step of receiving flight correction information including at least one of information for specifying acceleration and/or angular velocity of the flying mobile body, geomagnetic information, and information for specifying an altitude; and
   a step of performing correction processing on the flight position based on the received terrestrial broadcast signal, based on the flight correction information.
(8) The control device of the flying mobile body according to (1) to (7) may execute:
   a step of performing filtering processing on the received terrestrial broadcast signal; and
   a step of performing demodulating processing on the filtered signal, and
   the control device may estimate the flight position based on the demodulated signal.
(9) The receiver of the flying mobile body according to (1) to (8) may further include a plurality of antennas, and
   the control device may estimate the flight position based on intensities of the terrestrial broadcast signals received by the respective antennas.
(10) The control device of the flying mobile body according to (9) may further estimate the flight position based on a phase difference of the terrestrial broadcast signals received by the respective antennas.
(11) A flight position estimation method of the present disclosure is a flight position estimation method executed by a flying mobile body including: a receiver; and a control device,
   in which the receiver may receive a terrestrial broadcast signal transmitted from a broadcasting station, and
   the flight position estimation method may include a step of estimating a flight position of the flying mobile body based on the received terrestrial broadcast signal, which is executed by the control device.
(12) The flight position estimation method of the present disclosure is a flight position estimation method executed by a flying mobile body including: a receiver that includes a plurality of antennas; and a control device, the flying mobile body includes a sensor including an image sensor and/or a laser sensor that acquires surrounding environment information regarding a surrounding environment, the receiver receives a terrestrial broadcast signal of a frequency band of 470 MHz or more and 710 MHz or less transmitted from a broadcasting station,
   the flight position estimation method includes:
   a step of estimating a flight estimation position of the flying mobile body based on intensities of the terrestrial broadcast signals received by the respective antennas and a phase difference of the terrestrial broadcast signals received by the respective antennas;
   a step of acquiring the surrounding environment information by the sensor under SLAM control;
   a step of receiving flight information including information for specifying an altitude of the flying mobile body;
   a step of comparing the altitude of the flying mobile body with a threshold; and
   a step of determining, out of a first mode of causing the flying mobile body to fly based on the terrestrial broadcast signal and a second mode of causing the flying mobile body to fly based on the surrounding environment information acquired by the sensor, to cause the flying mobile body to fly in the first mode in a case where the altitude is equal to or greater than the threshold, and to cause the flying mobile body to fly in the second mode in a case where the altitude is less than the threshold, which are the steps executed by the control device,
   in which correction processing based on the surrounding environment information may be possibly performed even in a case where the flying mobile body flies in the first mode, and correction processing based on the terrestrial broadcast signal may be possibly performed even in a case where the flying mobile body flies in the second mode.
(13) A computer program of the present disclosure causes a computer to execute the flight position estimation method according to (11) or (12).
(12) A flight position estimation system of the present disclosure is a flight position estimation system of a flying mobile body including: a flying mobile body that includes a receiver and a control device; and a broadcasting station,
   in which the receiver receives a terrestrial broadcast signal transmitted from the broadcasting station, and
   the control device estimates a flight position of the flying mobile body based on the received terrestrial broadcast signal.
(14) The flight position estimation system of the present disclosure is a flight position estimation system of a flying mobile body including: a flying mobile body including a receiver that includes a plurality of antennas, and a control device; and a broadcasting station, the flying mobile body includes a sensor including an image sensor and/or a laser sensor that acquires surrounding environment information regarding a surrounding environment, the receiver receives a terrestrial broadcast signal of a frequency band of 470 MHz or more and 710 MHz or less transmitted from the broadcasting station,
   the control device executes:
   a step of estimating a flight position of the flying mobile body based on intensities of the terrestrial broadcast signals received by the respective antennas and a phase difference of the terrestrial broadcast signals received by the respective antennas;
   a step of acquiring the surrounding environment information by the sensor under SLAM control;
   a step of receiving flight information including information for specifying an altitude of the flying mobile body;
   a step of comparing the altitude of the flying mobile body with a threshold; and
   a step of determining, out of a first mode of causing the flying mobile body to fly based on the terrestrial broadcast signal and a second mode of causing the flying mobile body to fly based on the surrounding environment information acquired by the sensor, to cause the flying mobile body to fly in the first mode in a case where the altitude is equal to or greater than the threshold, and to cause the flying mobile body to fly in the second mode in a case where the altitude is less than the threshold,
   in which correction processing based on the surrounding environment information can be performed even in a case where the flying mobile body flies in the first mode, and correction processing based on the terrestrial broadcast signal can be performed even in a case where the flying mobile body flies in the second mode.

### INDUSTRIAL APPLICABILITY

A flying mobile body, a flight position estimation method, a computer program, and a flight position estimation system of the present disclosure are useful for implementing safe movement of the flying mobile body, for example.

### REFERENCE SIGNS LIST

- 1: Flight position estimation system
- 2: Broadcasting station
- 3: Control terminal
- 4: Information providing device
- 5: Flying mobile body
- 10: Sensor
- 20: Receiver
- 22: Center antenna
- 23A: First peripheral antenna
- 23B: Second peripheral antenna
- 23C: Third peripheral antenna
- 23D: Fourth peripheral antenna
- 30: Control device
- 31: Communication device
- 32: Arithmetic device
- 33: Storage device
- 40: Main body
- 50: Flying means
- N: Communication network
- SG: Terrestrial broadcast signal

## Claims

1. A flying mobile body comprising:
a receiver; and a control device,
wherein the receiver receives a terrestrial broadcast signal transmitted from a broadcasting station, and
the control device executes a step of estimating a flight position of the flying mobile body based on the received terrestrial broadcast signal.

2. The flying mobile body according to claim 1, further comprising a sensor including an image sensor and/or a laser sensor that acquires surrounding environment information regarding a surrounding environment,
wherein the control device executes:
a step of acquiring the surrounding environment information by the sensor; and
a step of determining a mode of causing the flying mobile body to fly, out of a first mode of causing the flying mobile body to fly based on the terrestrial broadcast signal and a second mode of causing the flying mobile body to fly based on the surrounding environment information.

3. The flying mobile body according to claim 2, wherein
the control device executes:
a step of receiving flight information including information for specifying an altitude of the flying mobile body; and
a step of comparing the altitude of the flying mobile body with a threshold,
determines to cause the flying mobile body to fly in the first mode in the step of determining a mode in a case where the altitude is equal to or greater than the threshold, and
determines to cause the flying mobile body to fly in the second mode in the step of determining a mode in a case where the altitude is less than the threshold.

4. The flying mobile body according to claim 3, wherein the threshold is set based on the surrounding environment information.

5. The flying mobile body according to claim 2, wherein
the control device
executes a step of receiving flight information including information for specifying whether the flying mobile body flies outdoors or indoors, and
in a case of receiving the information for specifying that the flying mobile body flies indoors, the control device determines to cause the flying mobile body to fly in the second mode in the step of determining a mode.

6. The flying mobile body according to claim 1, wherein
the control device executes:
a step of receiving flight correction information including at least one of information for specifying acceleration and/or angular velocity of the flying mobile body, geomagnetic information, and information for specifying an altitude; and
a step of performing correction processing on the flight position based on the received terrestrial broadcast signal, based on the flight correction information.

7. The flying mobile body according to claim 1, wherein
the control device executes:
a step of performing filtering processing on the received terrestrial broadcast signal; and
a step of performing demodulating processing on the filtered signal, and
the control device estimates the flight position based on the demodulated signal.

8. The flying mobile body according to claim 1, wherein the receiver further includes a plurality of antennas, and
the control device estimates the flight position based on intensities of terrestrial broadcast signals received by the respective antennas.

9. The flying mobile body according to claim 8, wherein the control device further estimates the flight position based on a phase difference of the terrestrial broadcast signals received by the respective antennas.

10. A flight position estimation method executed by a flying mobile body including a receiver and a control device, the receiver receiving a terrestrial broadcast signal transmitted from a broadcasting station, the flight position estimation method comprising
a step of estimating a flight estimated position of the flying mobile body based on the received terrestrial broadcast signal, which is executed by the control device.

11. A computer program for executing the flight position estimation method according to claim 10.

12. A flight position estimation system of a flying mobile body, comprising:
a flying mobile body including a receiver and a control device; and
a broadcasting station,
wherein the receiver receives a terrestrial broadcast signal transmitted from the broadcasting station, and
the control device estimates a flight position of the flying mobile body based on the received terrestrial broadcast signal.
